# EUROPEAN PATENT SPECIFICATION

(11) **EP 1 375 584 B1**
(45) Date of publication and mention of the grant of the patent: **18.08.2010**
(21) Application number: 02396097.4
(22) Date of filing: 20.06.2002
(51) Int. Cl.: C08L 23/06, C08J 5/18, C08F 2/00

(54) **Breathable Films**
Atmende Filme
Feuilles perméables

(43) Date of publication of application: 02.01.2004
(73) Proprietor: Borealis Technology Oy, 06101 Porvoo (FI)
(72) Inventor: Myhre, Ole Jan, 4230 Pregarten (AT); Mariacher, Albin, 4055 Pucking (AT); Nilsen, Jorunn, 00650 Helsinki (FI); Kirchberger, Manfred, 4731 Prambachkirchen (AT)
(74) Representative: Campbell, Neil Boyd

(56) References cited:
- WO-A-99/41310
- US-A- 5 405 901
- US-A- 6 096 014

## Description

### Background of the Invention

### Field of the Invention

The present invention concerns breathable films prepared from linear low-density polyethylene compositions. In addition, the present invention concerns bimodal linear low-density polyethylene compositions used for preparing breathable films. In particular, the present invention relates to breathable films having an improved mechanical strength.

### Description of Related Art

It is known in the art to prepare breathable films by blending thermoplastic polymers with fillers and stretching the films so that voids are formed adjacent to the filler particles.

WO-A-01/79343 discloses a microporous thermoplastic film having an improved impact strength and high moisture vapour transmission rate. The film is prepared from a blend containing 40 to 60 % calcium carbonate, 30 to 40 % linear low density PE and 1 to 10 % low density PE. The film is then incrementally stretched to provide the microporous film.

WO-A-99/32164 discloses an absorbent article with a topsheet, backsheet and an absorbent layer between the two. The backsheet comprises a microporous polymer film containing 30 to 60 % polyolefin and 40 to 80 % calcium carbonate. After the film is cast, it is drawn to form the microporous holes around the calcium carbonate filler. Polyethylene was used in the example.

WO-A-99/14262 discloses a breathable film made of a composition containing a first ethylene polymer, having a density lower than 890 kg/m3, a second ethylene polymer having a density above 900 kg/m3 and at least 35 % of a filler. The ratio between the first ethylene polymer and the second ethylene polymer is 25/75 - 75/25. The film was stretched to make it porous. The examples showed that metallocene based PE was used both as the first ethylene polymer and the second ethylene polymer.

WO-A-99/41310 discloses blending 40% polymer of density d=.97 g/cm³, MI 410 g/10 min into a final composition of d=.930 g/cm³, MFR₂₁=20 g/10 min blown into films

US-A-6096014 discloses microporous breathable films of CaCO₃ and blends of ethylene polymers

While the above documents disclose different breathable films and compositions for preparing them, there still remains a need for films having a high water vapour transmission rate combined with good mechanical properties and good processability.

### Summary of the Invention

It is an object of the present invention to provide breathable films having good mechanical properties and good processability.

These and other objects, together with the advantages thereof over known processes and products, which shall become apparent from the specification, which follows, are accomplished by the invention as hereinafter described and claimed.

The present invention is based on the provision of compositions comprising:
(i) 20 - 50 %, based on the weight of the total composition, a bimodal polyethylene composition comprising
(ii) a first (low molecular weight) component with a melt flow rate MFR₂ of 50 to 500 g/10 min, preferably of 100 to 400 g/10 min and a density of 940 to 975 kg/m³, preferably 945 to 975 kg/m³, the first component being present in the bimodal polyethylene composition in an amount of 37 to 48 % by weight,
(iii) at least one other component having a higher molecular weight (or a lower melt flow rate) and a lower density than the said first component, the second component being present in the bimodal polyethylene composition in an amount of 52 to 63 % by weight, so that the said bimodal polyethylene composition has a melt flow rate MFR₂ in the range of 0.1 to 4.0 g/10 min, preferably 0.1 to 0.8 g/10 min, MFR₂₁ in the range of 15 to 200 g/10 min, preferably 15 to 70 g/10 min and a density of 918 to 935 kg/m³, wherein said bimodal polyethylene composition is prepared using a Ziegler-Natta catalyst;
(iv) 40 - 70 %, based on the weight of the total composition, a particulate filler, and
(v) 0 - 30 %, based on the weight of the total composition, another olefin-based polymer

More specifically, the process according to the present invention is mainly characterised by what is stated in the characterising part of claim 1.

Additionally, the present invention provides a process for producing the polymer composition. First, the said bimodal polyethylene composition is produced in situ by polymerising or copolymerising ethylene in a reactor cascade formed by at least a first reactor and a second reactor in the presence of a polymerisation catalyst. The polymerisation catalyst has been prepared by supporting a magnesium compound, an aluminium compound and a titanium compound on a particulate support. Second, the bimodal composition is blended with the particulate filler and optionally, the other olefin based polymer.

One more aspect of the present invention is to provide breathable, microporous films having improved properties.

A further aspect of the invention is to provide the use of the above-mentioned composition for breathable films.

Still one more aspect of the invention is to provide a process for preparing breathable films.

Next, the invention will be more closely examined with the aid of the following detailed description and examples.

### Detailed Description of the Invention

### Definitions

For the purpose of the present invention, "slurry reactor" designates any reactor operating in slurry, in which reactor the polymer forms in particulate form. As examples of suitable reactors can be mentioned a continuous stirred tank reactor, a batch-wise operating stirred tank reactor or a loop reactor. According to a preferred embodiment the slurry reactor comprises a loop reactor.

By "gas phase reactor" is meant any mechanically mixed or fluidised bed reactor. Preferably the gas phase reactor comprises a fluidised bed reactor with gas velocities of at least 0.2 m/sec, which may further have a mechanical agitation.

By "melt flow rate" or abbreviated "MFR" is meant the weight of a polymer extruded through a standard cylindrical die at a standard temperature (190 °C for polyethylene) in a laboratory rheometer carrying a standard piston and load. MFR is a measure of the melt viscosity of a polymer and hence also of its molecular weight. The abbreviation "MFR" is generally provided with a numerical subscript indicating the load of the piston in the test. Thus, e.g., MFR₂ designates a 2.16 kg load. MFR can be determined using, e.g., by one of the following tests: ISO 1133 C4, ASTM D 1238 and DIN 53735.

### The composition

The present invention provides a composition for making breathable films having a high rate of water vapour transmission (WVTR), the composition comprising:
(i) 20 - 50 %, based on the weight of the total composition, a bimodal polyethylene composition comprising
(ii) a first (low molecular weight) component with a melt flow rate MFR₂ of 50 to 500 g/10 min, preferably of 100 to 400 g/10 min and a density of 940 to 975 kg/m³, preferably 945 to 975 kg/m³, the first component being present in the bimodal polyethylene composition in an amount of 37 to 48 % by weight,
(iii) at least one other component having a higher molecular weight (or a lower melt flow rate) and a lower density than the said first component, the second component being present in the bimodal polyethylene composition in an amount of 52 to 63 % by weight, so that the said bimodal polyethylene composition has a melt flow rate MFR₂ in the range of 0.1 to 4.0 g/10 min, preferably 0.1 to 0.8 g/10 min, MFR₂₁ in the range of 15 to 200 g/10 min, preferably 15 to 70 g/10 min and a density of 918 to 935 kg/m³, wherein said bimodal polyethylene composition is prepared using a Ziegler-Natta catalyst;
(iv) 40 - 70 %, based on the weight of the total composition, a particulate filler, and
(v) 0 - 30 %, based on the weight of the total composition, another olefin-based polymer

### Bimodal polyethylene composition

The use of bimodal polyethylene component gives the compositions of the present invention a high mechanical strength. It also gives the compositions a good processability and allows the preparation of thin films having a low basis weight. Very high water vapour transmission rates can be reached, with no pinholes in the film.

As referred to above, the bimodal polyethylene composition comprises 20 - 50 % of the composition, based on the total weight of the composition. The bimodal polyethylene composition further comprises of 37 - 48 % of a low molecular weight component and 52 - 63 % of a high molecular weight component, based on the weight of the bimodal polyethylene composition.

The low molecular weight component helps to improve the processability of the composition. It has an MFR₂ of about 50 to 500 g/10 min, preferably 100 to 400 g/10 min. It may contain a C₄- C₁₀ alpha-olefin comonomer so that it has a density of 940 kg/m³ or higher, preferably of about 945 kg/m³ or higher, but it may also be a homopolymer having a density of 975 kg/m³.

The high molecular weight component gives the mechanical properties to the composition. It is a copolymer of ethylene and a C₄ - C₁₀ alpha-olefin, and it has a higher molecular weight and a higher content of comonomer than the low molecular weight component. It has such molecular weight and comonomer content that at given properties of the low molecular weight component and at a given split of the components, the bimodal polyethylene composition has the desired melt index and density.

According to one preferred embodiment of the invention, the low molecular weight component is a copolymer of ethylene and a C₄ - C₁₀ alpha-olefin, having a melt flow rate MFR₂ of 50 to 500 g/10 min, preferably of 100 to 400 g/10 min and a density of 940 to 955 kg/m³, preferably 945 to 953 kg/m³. The bimodal polyethylene composition has a melt flow rate MFR₂ of 0.4 to 0.8 g/10 min, and a density of 918 to 925 kg/m³.

According to another preferred embodiment of the invention, the low molecular weight component is a copolymer of ethylene and a C₄- C₁₀ alpha-olefin, having a melt flow rate MFR₂ of 100 to 500 g/10 min, preferably of 200 to 400 g/10 min and a density of 940 to 955 kg/m³, preferably 945 to 953 kg/m³. The bimodal polyethylene composition has a melt flow rate MFR₂ of 0.1 to 0.3 g/10 min, MFR₂₁ of 15 to 35 g/10 min and a density of 918 to 925 kg/m³.

According to still another preferred embodiment of the invention, the low molecular weight component is a homopolymer of ethylene having a melt flow rate MFR₂ of 100 to 500 g/10 min, preferably of 200 to 400 g/10 min and a density of 975 kg/m³. The bimodal polyethylene composition has a melt flow rate MFR₂ of 0.1 to 0.3 g/10 min, MFR₂₁ of 15 to 35 g/10 min and a density of 925 to 935 kg/m³.

### Particulate filler

The particulate filler is a solid material in the form of particles, which can be uniformly dispersed over the film. Advantageously, the particulate filler has an average particle size within the range of 0.1 to 10 µm, preferably 0.1 to 4 µm. Examples of such fillers are calcium carbonate, magnesium carbonate, barium carbonate, sodium carbonate, different clays, silica, alumina, barium sulphate, diatomaceous earth, magnesium sulphate, mica, carbon, calcium oxide, magnesium oxide etc. The filler particles may also be coated with a fatty acid to improve the flow properties of the particles. Calcium carbonate is an especially preferred particulate filler.

The particulate filler comprises 40 - 70 % of the total weight of the composition. It is the present understanding that when the composition is extruded to a film and the film is stretched, micropores are formed adjacent to the filler particles. These micropores allow the passage of gases and vapours through the film. On the other hand, the micropores are small enough to prevent the passage of liquids through the film.

### Olefin-based polymer

The olefin-based polymer, which may be present in the compositions of the present invention, may be a homo- or copolymer of ethylene, propylene, 1-butene, 4-methyl-1-pentene etc, which is different from the bimodal polyethylene composition referred to above. Thus, it has been found that high-impact propylene copolymers are suitable to be used in the present invention. Another useful polymer which may be used is a bimodal linear low density polyethylene used for extrusion coating, having a melt index MFR₂ of 10 g/10 min and a density of 927 kg/m³.

### Process for making the composition

### Polymerisation catalyst

The polymerisation catalyst contains a magnesium compound, an aluminium compound and a titanium compound supported on a particulate support.

The particulate support can be an inorganic oxide support, such as silica, alumina, titania, silica-alumina and silica-titania. Preferably, the support is silica.

The average particle size of the silica support can be typically from 10 to 100 µm. However, it has turned out that special advantages can be obtained if the support has an average particle size from 15 to 30 µm, preferably from 18 to 25 µm. Especially it has been found out that the average particle size of the polymer produced in the process of the invention is the same irrespective whether the catalyst is prepared on a 20 µm support or on a 40 µm support. In fact, the fraction of fine polymer particles has been found to be lower if a support having an average particle size of 20 µm is used. The reduction of the fine polymer reduces the risk of plugging and thus contributes to a stable process operation. This, on the other hand, helps to produce polymer films with a good homogeneity.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred. 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794. Alternatively, it can be prepared by first preparing a solution from the components and then contacting the solution with a carrier, as described in WO-A-01/55230.

The above mentioned solid catalyst component is contacted with a aluminium alkyl cocatalyst, which preferably is an aluminium trialkyl compound, after which it can be used in polymerisation. The contacting of the solid catalyst component and the aluminium alkyl cocatalyst can either be conducted prior to introducing the catalyst into the polymerisation reactor, or it can be conducted by introducing the two components separately into the polymerisation reactor.

### Polymerisation process

To produce the polymer compositions according to the invention, ethylene is polymerised in the presence of a polymerisation catalyst at elevated temperature and pressure. Polymerisation is carried out in a series of polymerisation reactors selected from the group of slurry and gas phase reactors. In the most preferred embodiment, the reactor system comprises one loop reactor (referred to in the subsequent text as "the first reactor") and one gas phase reactor (referred to in the subsequent text as "the second reactor"), in that order.

However, it should be understood that the reactor system can comprise other reactors in addition to the first and the second reactor. Thus, it is possible to include reactors, e.g. for prepolymerisation, or to divide either of the reactors in two or more reactors.

The high molecular weight portion and the low molecular weight portion of the product can be prepared in any order in the reactors. A separation stage is normally needed between the reactors to prevent the carryover of reactants from the first polymerisation stage into the second one. The first stage is typically carried out using an inert reaction medium.

The catalyst used in the polymerisation process is a Ziegler-Natta catalyst. According to another preferred embodiment, no fresh catalyst is added to the second polymerisation stage.

In every polymerisation step it is possible to use also comonomers selected from the group of C₃₋₁₈ olefins, preferably C₄₋₁₀ olefins, such as 1-butene, 1-pentene, 1-hexene, 4-methyl-1-pentene, 1-heptene, 1-octene, 1-nonene and 1-decene as well as mixtures thereof.

In addition to the actual polymerisation reactors used for producing the bimodal ethylene homo- or copolymer, the polymerisation reaction system can also include a number of additional reactors, such as prereactors. The prereactors include any reactor for prepolymerising the catalyst and for modifying the olefinic feed, if necessary. All reactors of the reactor system are preferably arranged in series (in a cascade).

According to a preferred embodiment of the invention, the polymerisation comprises the steps of:
(i) subjecting ethylene, hydrogen and optionally comonomer(s) to a first polymerisation or copolymerisation reaction in the presence of the polymerisation catalyst in a first reaction zone in a loop reactor to produce a first reaction product having a low molecular weight with a melt flow rate MFR₂ of 50 to 500 g/10 min, preferably of 100 to 400 g/10 min and a density of 940 to 975 kg/m³, preferably 945 to 975 kg/m³,
(ii) recovering the first polymerisation product from the first reaction zone,
(iii) feeding the first polymerisation product to a second reaction zone or reactor,
(iv) feeding additional ethylene, comonomers and optionally hydrogen to the second reaction zone,
(v) subjecting the additional ethylene and additional comonomer(s) and optionally hydrogen to a second polymerisation reaction in the presence of the said polymerisation catalyst and the first polymerisation product,
(vi) to produce a polymer composition comprising from 41 to 48 % by weight of the low molecular weight polymer produced in step (i), and from 59 to 52 % by weight of the high molecular weight component produced in step (v),
(vii) the composition having a melt flow rate in the range MFR₂ of 0.1 to 4.0 g/10 min, preferably 0.1 to 0.8 g/10 min and a density of 918 to 935 kg/m³, and
(viii) recovering the combined polymerisation product from the second reaction zone.

In the first step of the process, ethylene with the comonomer(s) is fed into the first polymerisation reactor. Along with these components is fed also hydrogen, which functions as a molecular weight regulator. The amount of hydrogen depends on the desired molecular weight of the polymer. The catalyst may be fed to the reactor together with the reagents or, preferably, in a separate stream, normally by flushing with a diluent.

The polymerisation medium typically comprises the monomer (i.e. ethylene) and/or a hydrocarbon, in particular, a light inert hydrocarbon, such as propane, isobutane, n-butane or isopentane. The fluid is either liquid or gaseous. In the case of a loop reactor, the fluid is liquid and the suspension of polymer is circulated continuously through the slurry reactor, whereby a suspension of polymer in particle form in a hydrocarbon medium or monomer will be produced.

The conditions of the loop reactor are selected so that 37 - 48 wt-%, preferably 39 - 47 wt-%, of the whole production is polymerised in the loop reactor(s). The temperature is in the range of 40 to 110 °C, preferably in the range of 70 to 100 °C. The reaction pressure is in the range of 25 to 100 bar, preferably 35 to 80 bar. The mole fraction of ethylene in the reaction mixture is typically of 4 to 10 %, preferably of 5 to 9 %. The ratio of the alpha-olefin comonomer to ethylene depends on the density of the polymer that is produced in the first stage; typically it is of 0 to 800 mol/kmol.

Hydrogen is also fed into the first reactor to control the molecular weight (or melt flow rate) of the polymer. The exact ratio of hydrogen to ethylene depends on the desired melt flow rate of the polymer to be produced; typically it is of 100 to 600 mol/kmol, preferably of 150 to 400 mol/kmol.

The polymerisation heat is removed by cooling the reactor with a cooling jacket. The residence time in the slurry reactor must be at least 10 minutes, preferably 40-80 min for obtaining a sufficient degree of polymerisation.

After the first reaction zone at least part of the volatile components of the reaction medium are evaporated. As a result of the evaporation, at least the major part of hydrogen is removed from the product stream. The product stream is then subjected to a second polymerisation stage in the gas phase reactor in the presence of additional ethylene to produce a high molecular weight polymer.

The second reactor is a gas phase reactor, wherein ethylene, comonomers and preferably hydrogen are polymerised in a gaseous reaction medium in the presence of the polymerisation catalyst.

The gas phase reactor can be an ordinary fluidised bed reactor, although other types of gas phase reactors can be used. In a fluidised bed reactor, the bed consists of the formed and growing polymer particles as well as still active catalyst that enters the reactor with the polymer stream. The bed is kept in a fluidised state by introducing gaseous components, for instance monomer and comonomer(s) from the bottom of the reactor on such a flow rate that the particles are supported but not entrained by the gas stream. The fluidising gas can contain also inert gases, like nitrogen and propane and also hydrogen as a molecular weight modifier. The fluidised bed gas phase reactor can be equipped with a mechanical mixer.

The gas phase reactor used can be operated in the temperature range of 50 to 115 °C, preferably between 60 and 100 °C and the reaction pressure between 10 and 40 bar and the partial pressure of ethylene between 2 and 20 bar, preferably between 3 and 8 bar.

The production split between the low molecular weight polymerisation reactor and the high molecular weight polymerisation reactor is (37 to 48 %): (63 to 52 %), based on the weight of the polymer composition. Preferably, 39 to 47 wt- of the ethylene copolymer is produced at conditions to provide a polymer having an MFR₂ of 50 to 500 g/10 min, preferably of 100 to 400 g/10 min and a density 940 to 975 kg/m³, preferably 945 to 975 kg/m³. Respectively, it is preferred that 53 to 61 % of the ethylene copolymer is produced at conditions to provide the high molecular weight polymer, having been produced in such conditions that the final polymer composition has an MFR₂ of 0.1 to 4.0 g/10 min, preferably 0.1 to 0.8 g/10 min, and a density of 918 to 925 kg/m³.

As mentioned above, the ratio of comonomer to ethylene in the second reactor is selected so that the final polymer composition has the desired density. A suitable range is 500 to 900 mol/kmol, preferably 500 to 800 mol/kmol.

In a similar fashion, the ratio of hydrogen to ethylene in the second reactor is selected so that the final polymer composition has the desired melt flow rate. A typical range is 1 to 30 mol/kmol, preferably 3 to 20 mol/kmol.

The present polymers and copolymers of ethylene can be blended and optionally compounded with additives and adjuvants conventionally used in the art. Thus, suitable additives include antistatic agents, flame retardants, light and heat stabilisers, pigments and processing aids.

### Compounding

After the polymer is collected from the reactor and the hydrocarbon residues are removed therefrom, the polymer is compounded and extruded to pellets. In this process step, any extruder known in the art may be used. It is preferred, however, to use a twin screw extruder. It may be of a co-rotating type, such as those produced by Wemer & Pfleiderer having a designation ZSK, e.g. ZSK 90 having a 90 mm screw diameter. Alternatively, it may be of a counter-rotating type, such as those produced by Japan Steel Works, having a designation JSW CIM-P, e.g. CIM90P, having a 90 mm screw diameter. It is especially preferred to use a counter-rotating twin screw extruder.

The particulate filler and optionally, the olefin-based polymer may be added to the bimodal polyethylene composition at this extrusion stage. It is possible, however, to mix the bimodal polyethylene composition with additives, and extrude it to pellets. These pellets are then introduced into a second extrusion stage, to which also the particulate filler and optionally, the olefin-based polymer, is introduced. The thus obtained compound may then be extruded directly into a film. However, it may also be extruded to pellets, which are collected and extruded to a film in a separate extrusion stage.

### Films

The composition according to the present invention is used to prepare breathable films. The films may be produced either by blowing or casting. The polymers having a melt index at the lower end of the MFR range, having MFR₂ of 0.1 to 0.8 g/10 min, are suitable for film blowing. On the other hand, the polymers having a melt index at the higher end of the MFR range, having MFR₂ of 0.4 to 4.0 g/10 min, are suitable for making cast films.

After the film has been prepared, it shall be stretched. The purpose of stretching is to produce micropores adjacent to the filler particles, thus making the film breathable. The film shall be stretched from 3 to 10 times, preferably 4 to 7 times, its original length. This ratio between the length of the stretched film and the length of the original film is in the subsequent text referred to as the stretching ratio.

Surprisingly, the films of the present invention have a very high water vapour transmission rate. To achieve this high rate, it is advantageous to use a high fraction of filler particles (from 57 to 70 %) in the composition, preferably together with a high stretching ratio (from 5.5 to 7).

It appears that the high mechanical strength and the good processability of the bimodal polyethylene composition make it possible to use high stretching ratios. This allows to reach a very high water vapour transmission rate, higher than 3000 g/m²/24 h, in fact even higher than 4000 g/m²/24 h.

Alternatively and surprisingly, water vapour transmission rate higher than 3000 g/m²/24 h, or even higher than 4000 g/m²/24 h can be obtained by providing a composition comprising 25 to 40 % of the bimodal polyethylene composition, 50 to 57 % of the particulate filler and 5 to 20 % of a propylene polymer. When this composition is prepared into a film and stretched with a stretching ratio of 4 to 5.5, the resulting film has the high water vapour transmission rate referred to above.

The effect of the presence of the propylene polymer on the water vapour transmission rate is surprisingly strong. It was found that the rate could be increased by more than 100 % by adding the propylene polymer into the composition, compared to a similar composition where the propylene polymer was not present. The propylene polymers that can be used to increase the water vapour transmission rate include, propylene homopolymers, random copolymers of propylene with other olefins, especially ethylene, high impact propylene copolymers and propylene-ethylene rubbers. It is believed that polymers of other olefins, such as 1-butene or 4-methyl-1-pentene would have a similar effect.

Also, thin films having a low basis weight can be obtained without pinholes. Thus, the films of the present invention have can have a thickness of 25 µm or less, even 20 µm or less, and they can have a basis weight of 25 g/m² or less, even 20 g/m² or less. This makes it possible to prepare the films from a smaller amount of polymer, thus allowing to save in raw material costs.

One more surprising advantage of the use of the bimodal polyethylene composition as a base polymer in the composition is the reduction of the amount of scrap material when producing the films and the compositions, compared with the situation when a unimodal polyethylene is used as a base polymer in the composition. It appears that the use of the bimodal polyethylene composition gives a good homogeneity of the composition, and therefore the amount of waste is substantially reduced. This improves the economy of the film preparation process.

### Description of Analytical Methods

### Tensile strength

The experiment is performed according to ISO 1184 method. The specimen is extended along its major axis at a constant speed. Normal 50 mm could be used as a distance between grips (gauge length) in film tensile testing. 125 mm gauge length would be required for tensile modulus measurement so this was not possible for 100 mm cast film in transverse direction.

### Tear strength

Tear testing is done according to ASTM 1922. Machine direction is easier, as the thickness variation in critical test direction is better controlled. Thickness varies more in transverse direction and occasionally difficulties arise in taking the sample in a manner, which guarantees an even thickness for the critical testing area.

### Water vapour transmission rate (WVTR)

Water vapour transmission rate was measured by using Permatran - W 100K water vapour permeation analysis system, commercially available from Modern Controls, Inc. (MOCON).

### Basis weight

Basis weight can be determined in accordance with Federal Test Method No. 191A/5041. Sample size for the sample materials was 15.24x15.24 cm, and the resulting value is an average of at least three individual measurements.

### Pinholes number

The presence of pinholes is determined by subjecting a film sample to water pressure corresponding to 650 mm water height.

The invention is further illustrated with the aid of the following examples.

### Example 1 (Preparation of the catalyst)

### Complex preparation:

87 kg of toluene was added into the reactor. Then 45.5 kg Bomag A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

### Solid catalyst component preparation:

275 kg silica (ES747JR of Crossfield, having average particle size of 20 µm) activated at 600 °C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35 °C while stirring the treated silica for one hour. The silica was dried at 50 °C for 8.5 hours. Then 655 kg of the complex prepared as described above (2 mmol Mg/g silica) was added at 23 °C during ten minutes. 86 kg pentane was added into the reactor at 22 °C during ten minutes. The slurry was stirred for 8 hours at 50 °C. Finally, 52 kg TiCl₄ was added during 0.5 hours at 45 °C The slurry was stirred at 40 °C for five hours. The catalyst was then dried by purging with nitrogen.

### Example 2 (Preparation of the bimodal composition)

Into a 500 dm³ loop reactor, operated at 85 °C temperature and 60 bar pressure, was continuously introduced propane diluent, ethylene, hydrogen and 1-butene comonomer in such flow rates that ethylene content in the reaction mixture was 6.7 mol-%, the mole ratio of hydrogen to ethylene was 235 mol/kmol and the mole ratio of 1-butene to ethylene was 570 mol/kmol. At the same time into the reactor was continuously introduced a polymerisation catalyst prepared according to Example 1 and triethylaluminium cocatalyst in such quantities that ethylene polymer was produced at a rate of 25 kg/h. The molar ratio of aluminium of the cocatalyst to titanium of the catalyst was 20. The polymer had an MFR₂ of 300 g/10 min and density of 951 kg/m³.

The polymer was withdrawn from the loop reactor by using settling legs, and the polymer slurry was introduced into a flash tank operated at 3 bar pressure and 20 °C temperature.

From the flash tank the polymer was introduced into a fluidised bed gas phase reactor, which was operated at 80 °C temperature and 20 bar pressure. Into the gas phase reactor were additional ethylene, hydrogen and 1 -butene introduced, as well as nitrogen flushes to keep the connections and piping open. Consequently, the concentration of ethylene in the reactor gas was 19 mol-%, the molar ratio of hydrogen to ethylene was 3 mol/kmol and the molar ratio of 1-butene to ethylene was 645 mol/kmol. The polymer was withdrawn from the reactor at a rate of 56 kg/h. After collecting the polymer, it was blended with additives and extruded into pellets in a counterrotating twin-screw extruder JSW CIM90P. The resulting polymer had an MFR₂ of 0.47 g/10 min and density of 922 kg/m³. The split between the polymer produced in the loop reactor and the polymer produced in the gas phase reactor was 45/55.

### Example 3

The procedure of Example 2 was repeated, except that the conditions in the reactors were changed. The conditions and the resulting polymer data can be found in Table 1.

### Example 4

The procedure of Example 2 was repeated, except that the conditions in the reactors were changed. The conditions and the resulting polymer data can be found in Table 1.

**Table 1**

| **Example** | **2** | **3** | **4** |
|---|---|---|---|
| Ethylene concentration in loop reactor, mol-% | 6.7 | 6.7 | 6.7 |
| Hydrogen to ethylene ratio in loop reactor, mol/kmol | 235 | 265 | 305 |
| 1-butene to ethylene mole ratio in loop reactor, mol/kmol | 570 | 514 | 0 |
| Polymer production rate in loop reactor, kg/h | 25 | 26 | 25 |
| MFR₂ of polymer produced in loop reactor, g/10 min | 300 | 580 | 300 |
| Density of polymer produced in loop reactor, kg/m³ | 951 | 951 | 975 |
| Ethylene concentration in gas phase reactor, mol% | 19 | 7.8 | 8.2 |
| Hydrogen to ethylene ratio in gas phase reactor, mol/kmol | 3 | 7 | 8 |
| 1-butene to ethylene mole ratio in gas phase reactor, mol/kmol | 645 | 460 | 480 |
| Average particle size of the powder, mm | 0.38 | 0.36 | ND |
| MFR₂ of the final polymer, g/10 min | 0.47 | 0.21 | ND |
| MFR₂₁ of the final polymer, g/10 min | 51 | 22 | 20 |
| Density of the final polymer, kg/m³ | 922 | 923 | 931 |
| Split, loop/gpr | 45/55 | 41/59 | 41/59 |

| | | | |
|---|---|---|---|
| ND denotes that the respective property has not been determined | | | |

### Example 5

Polymer produced in Example 4 was compounded with SA233F (a high-impact copolymer of propylene with ethylene, produced and marketed by Borealis, having ethylene content of 14.5 % by weight and MFR₂, determined at 230 °C, of 0.8 g/10 min) and calcium carbonate. The final composition contained 35 % by weight of the bimodal polyethylene composition of Example 4, 10 % by weight of SA233F and 55 % by weight of CaCO₃. The thus obtained composition was then blown to a film and the resulting film was stretched in the machine direction 4.7 times its original length. The resulting film had a thickness of 30 µm, a basis weight of 34 g/m², tensile strength in the machine direction of 50 MPa, and in the transverse direction of 5 MPa. Tear strength in the machine and transverse directions were 1.2 and 40 N, respectively. The water vapour transmission rate was found to be 4990 g/m²/24 h. The film had no pinholes.

### Example 6

The procedure of Example 5 was repeated, except that the polymer composition comprised of 40 % of polymer produced in Example 2 as the bimodal polyethylene composition and 60 % of CaCO₃. The composition was then blown to a film and the resulting film was stretched in the machine direction 6 times its original length. The resulting film had a thickness of 19 µm, a basis weight of 16 g/m², tensile strength in the machine direction of 59 MPa, and in the transverse direction of 4.1 MPa. Tear strength in the machine and transverse directions were 1.1 and 43 N, respectively. The water vapour transmission rate was found to be 6280 g/m²/24 h. The film had no pinholes.

### Example 7

The procedure of Example 5 was repeated, except that the polymer composition comprised of 45 % of polymer produced in Example 3 as the bimodal polyethylene composition and 55 % of CaCO₃. The composition was then blown to a film and the resulting film was stretched in the machine direction 6 times its original length. The resulting film had a thickness of 25 µm, tensile strength in the machine direction of 67 MPa, and in the transverse direction of 4.1 MPa. Tear strength in the machine and transverse directions were 1.2 and 47 N, respectively.

### Example 8

The procedure of Example 5 was repeated, except that the polymer composition comprised of 45 % of polymer produced in Example 4 as the bimodal polyethylene composition and 55 % of CaCO₃. The composition was then blown to a film and the resulting film was stretched in the machine direction 5 times its original length. The resulting film had a thickness of 28 µm, a basis weight of 26 g/m², tensile strength in the machine direction of 86 MPa, and in the transverse direction of 6.0 MPa. Tear strength in the machine and transverse directions were 1.9 and 112 N, respectively. The water vapour transmission rate was found to be 1930 g/m²/24 h. The film had no pinholes.

### Example 9

The procedure of Example 5 was repeated, except that the polymer composition comprised of 25 % of polymer produced in Example 4 as the bimodal polyethylene composition, 20 % of CB9270 (a bimodal linear low density polyethylene designed for extrusion coating, produced and marketed by Borealis, having a density of 927 kg/m³ and MFR2 of 10 g/10 min), and 55 % of CaCO₃. The composition was then blown to a film and the resulting film was stretched in the machine direction 5 times its original length. The resulting film had a thickness of 21 µm, a basis weight of 23 g/m², tensile strength in the machine direction of 72 MPa, and in the transverse direction of 6.2 MPa. Tear strength in the machine and transverse directions were 1.5 and 100 N, respectively. The water vapour transmission rate was found to be 1090 g/m²/24 h. The film had no pinholes.

### Example 10

The procedure of Example 9 was repeated, except that film was stretched in the machine direction 5.5 times its original length. The resulting film had a thickness of 21 µm tensile strength in the machine direction of 85 MPa, and in the transverse direction of 5.5 MPa. Tear strength in the machine and transverse directions were 1.2 and 100 N, respectively.

## Claims

1. A composition for making breathable films, the composition comprising:
(i) 20-50%, based on the weight of the total composition, a bimodal polyethylene composition of:
(ii) a first (low molecular weight) component, which is a homopolymer of ethylene or a copolymer of ethylene and one or more C₄ to C₁₀ alpha-olefins, having a melt flow rate, determined according to DIN 53735, ISO 1133 C4 or ASTM D 1238 at 190°C, MFR₂ of 50 to 500 g/10 min, preferably of 100 to 400 g/10 min and a density of 940 to 975 kg/m³, preferably 945 to 975 kg/m³, the first component being present in the bimodal polyethylene composition in an amount of 37 to 48 % by weight;
(iii) at least a second component, which is a copolymer of ethylene and one or more C₄ to C₁₀ alpha-olefins, having a higher molecular weight, a lower melt flow rate and a lower density than the said first component, the second component being present in the bimodal polyethylene composition in an amount of 52 to 63% by weight, so that the said bimodal polyethylene composition has a melt flow rate, determined according to DIN 53735, ISO 1133 C4 or ASTM D 1238 at 190°C, MFR₂ in the range of 0.1 to 4.0 g/10 min, MFR₂₁ in the range of 15 to 200 g/10 min and a density of 918 to 935 kg/m³,
wherein said bimodal polyethylene composition is prepared using a Ziegler-Natta catalyst;
(iv) 40-70%, based on the weight of the total composition, a particulate filler; and
(v) 0-30%, based on the weight of the total composition, another olefin-based polymer.

2. The composition according to claim 1, wherein the other olefin based polymer is a homo- or copolymer of ethylene, propylene, 1-butene and 4-methyl-1-pentene.

3. The composition according to Claim 1 or 2, wherein the other olefin based polymer is a propylene homo- or copolymer, preferably a copolymer of propylene and ethylene.

4. The composition according to Claim 3, wherein the composition comprises of 5 to 20%, based on the weight of the total composition, of the said propylene polymer.

5. The composition according to Claim 1, wherein the content of the particulate filler is 55 to 70%.

6. A composition according to any one of the preceding claims, wherein the particulate filler is calcium carbonate.

7. The use of the composition according to any one of the preceding claims, for making films.

8. A breathable polymer film, which film comprises a composition according to any one of claims 1 to 7.

9. A film according to Claim 8, wherein the film has a basis weight of less than 25 g/m².

10. A process for producing a breathable polymer film, comprising the steps of:
(A) providing into an extruder a composition according to any one of claims 1 to 6;
(B) extruding the composition to a film; and
(C) stretching the film to produce a breathable film.

11. The process according to Claim 10, wherein the film is stretched with a stretching ratio of 3 to 10, preferably 4 to 7.

12. The process according to Claim 10 or 11, wherein the bimodal polyethylene composition has been produced by:
(i) subjecting ethylene, hydrogen and optionally comonomers to a first polymerisation or copolymerisation reaction in the presence of a Ziegler-Natta polymerisation catalyst in a first reaction zone to produce a first polymerisation product having a low molecular weight with a melt flow rate, determined according to DIN 53735, ISO 1133 C4 or ASTM D 1238 at 190°C, MFR₂ of 50 to 500 g/10 min, preferably of 100 to 400 g/10 min and a density of 940 to 975 kg/m³, preferably 945 to 975 kg/m³.
(ii) recovering the first polymerisation product from the first reaction zone;
(iii) feeding the first polymerisation product to a second reaction zone or reactor;
(iv) feeding additional ethylene, comonomers and optionally hydrogen to the second reaction zone;
(v) subjecting additional ethylene and additional comonomer(s) and optionally hydrogen to the second reaction zone in the presence of the said polymerisation catalyst and the first polymerisation product;
(vi) to produce a polymer composition comprising from 41 to 48% by weight of the low molecular weight polymer produced in step (i), and from 59 to 52% by weight of the high molecular weight component produced in step (v);
(vii) the composition having a melt flow rate, determined according to DIN 53735, ISO 1133 C4 or ASTM D 1238 at 190°C, in the range MFR₂ of 0.1 to 4.0 g/10 min, preferably 0.1 to 0.8 g/10 min and a density of 918 to 935 kg/m³; and
(viii) recovering the combined polymerisation product from the second reaction zone.

## Patentansprüche

1. Zusammensetzung für die Herstellung von atmungsfähigen Folien, wobei die Zusammensetzung folgendes aufweist:
(i) 20 bis 50 %, und zwar auf das Gewicht der gesamten Zusammensetzung bezogen, einer bimodalen Polyethylenzusammensetzung aus:
(ii) einer ersten Komponente (mit geringem Molekulargewicht), die ein Homopolymer von Ethylen oder ein Copolymer von Ethylen und einem oder mehreren C₄-C₁₀-α-Olefinen ist, mit einer Schmelzfließrate, MFR₂, gemäß DIN 53735, ISO 1133 C4 oder ASTM D 1238 bei 190°C bestimmt, von 50 bis 500 g/10 min, vorzugsweise von 100 bis 400 g/10 min und einer Dichte von 940 bis 975 kg/m³, vorzugweise 945 bis 975 kg/m³, wobei die erste Komponente in einer Menge von 37 bis 48 Gew.-% in der bimodalen Polyethylenzusammensetzung vorliegt;
(iii) zumindest einer zweiten Komponente, die ein Copolymer von Ethylen und einem oder mehreren C₄-C₁₀-α-Olefinen ist, mit einem höheren Molekulargewicht, einer niedrigeren Schmelzfließrate und einer geringeren Dichte als die erste Komponente, wobei die zweite Komponente in einer Menge von 52 bis 63 Gew.-% in der bimodalen Polyethylenzusammensetzung vorliegt, so daß die bimodale Polyethylenzusammensetzung eine Schmelzfließrate, gemäß DIN 53735, ISO 1133 C4 oder ASTM D 1238 bei 190°C bestimmt, MFR₂, im Bereich von 0,1 bis 4,0 g/10 min, MFR₂₁ im Bereich von 15 bis 200 g/10 min und eine Dichte von 918 bis 935 kg/m³ aufweist,
wobei diese bimodale Polyethylenzusammensetzung unter Verwendung eines Ziegler-Natta-Katalysators hergestellt wird;
(iv) 40 bis 70 %, und zwar auf das Gewicht der gesamten Zusammensetzung bezogen, eines partikelförmigen Füllstoffs; und
(v) 0 bis 30 %, und zwar auf das Gewicht der gesamten Zusammensetzung bezogen, eines weiteren Polymers auf Olefin-Basis.

2. Zusammensetzung nach Anspruch 1, wobei das andere Polymer auf Olefin-Basis ein Homo- oder Copolymer von Ethylen, Propylen, 1-Bufen und 4-Methyl-1-penten ist.

3. Zusammensetzung nach Anspruch 1 oder 2, wobei das andere Polymer auf Olefin-Basis ein Propylenhomo- oder -copolymer, vorzugsweise ein Copolymer von Propylen und Ethylen ist.

4. Zusammensetzung nach Anspruch 3, wobei die Zusammensetzung 5 bis 20 %, und zwar auf das Gewicht der gesamten Zusammensetzung bezogen, des Propylenpolymers umfaßt.

5. Zusammensetzung nach Anspruch 1, wobei der Gehalt des partikelförmigen Füllstoffs 55 bis 70 % beträgt.

6. Zusammensetzung nach einem der vorstehenden Ansprüche, wobei der partikelförmige Füllstoff Calciumcarbonat ist.

7. Verwendung der Zusammensetzung nach einem der vorstehenden Ansprüche für die Herstellung von Folien.

8. Atmungsfähige Polymerfolie, wobei die Folie eine Zusammensetzung nach einem der Ansprüche 1 bis 7 umfaßt.

9. Folie nach Anspruch 8, wobei die Folie ein Basisgewicht von weniger als 25 g/m² aufweist.

10. Verfahren zum Herstellen einer atmungsfähigen Polymerfolie, umfassend die Schritte:
(A) Beschicken eines Extruders mit einer Zusammensetzung nach einem der Ansprüche 1 bis 6;
(B) Extrudieren der Zusammensetzung zu einer Folie; und
(C) Recken der Folie, so daß eine atmungsfähige Folie erzeugt wird.

11. Verfahren nach Anspruch 10, wobei die Folie bei einem Reckverhältnis von 3 bis 10, vorzugsweise 4 bis 7 gereckt wird.

12. Verfahren nach Anspruch 10 oder 11, wobei die bimodale Polyethylenzusammensetzung hergestellt worden ist durch:
(i) Unterziehen von Ethylen, Wasserstoff und gegebenenfalls Comonomeren einer ersten Polymerisations- oder Copolymerisationsreaktion in Gegenwart eines Ziegler-Natta-Polymerisationskatalysators in einer ersten Reaktionszone, so daß ein erstes Polymerisationsprodukt erzeugt wird, das ein geringes Molekulargewicht bei einer Schmelzfließrate, gemäß DIN 53735, ISO 1133 C4 oder ASTM D 1238 bei 190°C, bestimmt, MFR₂, von 50 bis 500 g/10 min, vorzugsweise von 100 bis 400 g/10 min, und eine Dichte von 940 bis 975 kg/m³, vorzugweise 945 bis 975 kg/m³ aufweist;
(ii) Gewinnen des ersten Polymerisationsproduktes aus der ersten Reaktionszone;
(iii) Einführen des ersten Polymerisationsproduktes in eine zweite Reaktionszone oder einen Reaktor;
(iv) Einführen von weiterem Ethylen, Comonomeren und gegebenenfalls Wasserstoff in die zweite Reaktionszone;
(v) Unterziehen des zusätzlichen Ethylens und des zusätzlichen Comonomers (der zusätzlichen Comonomere) und gegebenenfalls Wasserstoff einer zweiten Reaktionszone in Gegenwart des Polymerisationskatalysators und des ersten Polymerisationsproduktes;
(vi) so daß eine Polymerzusammensetzung erzeugt wird, die 41 bis 48 Gew.-% des im Schritt (i) erzeugten Polymers mit geringem Molekulargewicht und 59 bis 52 Gew.-% der im Schritt (v) erzeugten Komponente mit hohem Molekulargewicht umfaßt;
(vii) wobei die Zusammensetzung eine Schmelzfließrate, gemäß DIN 53735, ISO 1133 C4 oder ASTM D 1238 bei 190°C bestimmt, MFR₂, im Bereich von 0,1 bis 4,0 g/10 min, vorzugsweise 0,1 bis 0,8 g/10 min und eine Dichte von 918 bis 935 kg/m³ aufweist; und
(viii) Gewinnen des kombinierten Polymerisationsproduktes aus der zweiten Reaktionszone.

## Revendications

1. Composition pour fabriquer des films respirants, la composition comprenant :
(i) de 20 à 50 %, sur la base du poids de la composition totale, d'une composition de polyéthylène bimodale constituée par :
(ii) un premier composant (de faible poids moléculaire), qui est un homopolymére d'éthylène ou un copolymère d'éthylène et d'une ou de plusieurs alpha-oléfines en C₄ à C₁₀, ayant un indice de fluidité à chaud, déterminé selon les normes DIN 53735, ISO 1133 C4 ou ASTM D 1238 à 190 °C. MFR₂ de 50 à 500 g/10 min, de préférence, de 100 à 400 g/10 min et une densité de 940 à 975 kg/m³, de préférence, de 945 à 975 kg/m³, le premier composant étant présent dans la composition de polyéthylène bimodale en une quantité de 37 à 48 % en poids ;
(iii) au moins un second composant, qui est un copolymère d'éthylène et d'une ou de plusieurs alpha-oléfines en C₄ à C₁₀, ayant un poids moléculaire plus élevé, un indice de fluidité à chaud plus bas et une densité plus basse que ledit premier composant, le second composant étant présent dans la composition de polyéthylène bimodale en une quantité de 52 à 63 % en poids, de façon que ladite composition de polyéthylène bimodale ait un indice de fluidité à chaud, déterminé selon les normes DIN 53735, ISO 1133 C4 ou ASTM D 1238 à 190 °C, MFR₂ dans la plage de 0,1 à 4,0 g/10 min, MFR₂, dans la plage de 15 à 200 g/10 min et une densité de 918 à 935 kg/m³,
ladite composition de polyéthylène bimodale étant préparée à l'aide d'un catalyseur de Ziegler-Natta ;
(iv) de 40 à 70 %, sur la base du poids de la composition totale, d'une charge particulaire ; et
(v) de 0 à 30 %, sur la base du poids de la composition totale, d'un autre polymère à base d'oléfine(s).

2. Composition selon la revendication 1, dans laquelle l'autre polymère à base d'oléfine(s) est un homopolymére ou un copolymère d'éthylène, de propylène, de 1-butène et de 4-méthyl-1-pentène.

3. Composition selon les revendications 1 ou 2, dans laquelle l'autre polymère à base d'oléfine(s) est un homopolymère ou un copolymère de propylène, de préférence, un copolymère de propylène et d'éthylène.

4. Composition selon la revendication 3, dans laquelle la composition comprend de 5 à 20 %, sur la base du poids de la composition totale, dudit polymère de propylène.

5. Composition selon la revendication 1, dans laquelle la teneur de la charge particulaire est de 55 à 70 %.

6. Composition selon l'une quelconque des revendications précédentes, dans laquelle la charge particulaire est du carbonate de calcium.

7. Utilisation de la composition selon l'une quelconque des revendications précédentes pour fabriquer des films.

8. Film polymère respirant, lequel film comprend une composition selon l'une quelconque des revendications 1 à 7.

9. Film selon la revendication 8, dans lequel le film a un grammage inférieur à 25 g/m².

10. Procédé de production d'un film polymère respirant, comprenant les étapes consistant à :
(A) charger dans une extrudeuse une composition selon l'une quelconque des revendications 1 à 6 ;
(B) extruder la composition pour obtenir un film ; et
(C) étirer le film pour obtenir un film respirant.

11. Procédé selon la revendication 10, dans lequel le film est étiré à un taux d'étirage de 3 à 10, de préférence, de 4 à 7.

12. Procédé selon les revendications 10 ou 11, dans lequel la composition de polyéthylène bimodale a été produite comme suit :
(i) soumettre l'éthylène, l'hydrogène et éventuellement les comonomères à une première réaction de polymérisation ou de copolymérisation en présence d'un catalyseur de polymérisation Ziegler-Natta dans une première zone de réaction pour obtenir un premier produit de polymérisation ayant un faible poids moléculaire et un indice de fluidité à chaud, déterminé selon les normes DIN 53735, ISO 1133 C4 ou ASTM D 1238 à 190 °C, MFR₂ de 50 à 500 g/10 min, de préférence, de 100 à 400 g/10 min et une densité de 940 à 975 kg/m³, de préférence, de 945 à 975 kg/m³ ;
(ii) récupérer le premier produit de polymérisation à partir de la première zone de réaction ;
(iii) injecter le premier produit de polymérisation dans une seconde zone de réaction ou réacteur ;
(iv) injecter une quantité supplémentaire d'éthylène, de comonomères et éventuellement d'hydrogène dans la seconde zone de réaction ;
(v) soumettre la quantité supplémentaire d'éthylène et la quantité supplémentaire de comonomère(s) et éventuellement l'hydrogène à la seconde zone de réaction en présence dudit catalyseur de polymérisation et du premier produit de polymerisation;
(vi) pour produire une composition polymère comprenant de 41 à 48 % en poids du polymère de faible poids moléculaire produit à l'étape (i), et de 59 à 52 % en poids du composant de poids moléculaire élevé produit à l'étape (v) ;
(vii) la composition ayant un indice de fluidité à chaud, déterminé selon les normes DIN 53735, ISO 1133 C4 ou ASTM D 1238 à 190 °C, dans la plage MFR₂ de 0,1 à 4,0 g/10 min, de préférence, de 0,1 à 0,8 g/10 min et une densité de 918 à 935 kg/m³ ; et
(viii) récupérer le produit de polymérisation combiné à partir de la seconde zone de réaction.
